# EUROPÄISCHE PATENTSCHRIFT

(11) **EP 2 223 389 B1**
(45) Veröffentlichungstag und Bekanntmachung des Hinweises auf die Patenterteilung: **09.01.2013**
(21) Anmeldenummer: 08854116.4
(22) Anmeldetag: 22.11.2008
(51) Int. Cl.: H01R 4/30

(54) **VORRICHTUNG UND VERFAHREN ZUR VERLIERSICHEREN AUFNAHME EINER SCHRAUBE AN EINER ANSCHLUSSKLEMME**
DEVICE AND METHOD FOR THE CAPTIVE ACCOMMODATION OF A SCREW IN A TERMINAL
DISPOSITIF ET PROCÉDÉ POUR LA RÉCEPTION IMPERDABLE D'UNE VIS SUR UNE BORNE DE CONNEXION

(30) Priorität: 30.11.2007 DE 102007058040
(43) Veröffentlichungstag der Anmeldung: 01.09.2010
(73) Patentinhaber: Phoenix Contact GmbH & Co. KG, 32823 Blomberg (DE)
(72) Erfinder: KRAWINKEL, Matthias, 32839 Steinheim (DE)
(74) Vertreter: Michalski Hüttermann & Partner
(86) Internationale Anmeldenummer: PCT/EP2008/009916
(87) Internationale Veröffentlichungsnummer: WO 2009/068229

(56) Entgegenhaltungen:
- CH-A- 511 522
- DE-U1- 9 308 096
- DE-U1- 29 621 267
- FR-A- 2 392 516

## Beschreibung

Die Erfindung betrifft eine Vorrichtung und ein Verfahren zur verliersicheren Aufnahme einer Schraube an einer Anschlussklemme oder einem anderen elektrischen oder elektronischen Bauteil. Die erfindungsgemäße Vorrichtung umfasst ein Gehäuse und wenigstens einen daran vorgesehenen Schacht zur Aufnahme einer Schraube, um einen Leiter zu sichern oder um das Gehäuse beispielsweise an einem anderen Bauteil zu befestigen. Dabei ist die Schraube in einem Schacht des Gehäuses aufgenommen und wird durch eine Sicherungseinrichtung in dem Schacht verliersicher gehalten.

Im Stand der Technik sind Sicherungsanordnungen bekannt geworden. Beispielsweise ist aus der DE 296 21 267 U1 eine Schraubklemme bekannt geworden, bei der der Schraubenkopf durch ein Abdeckgehäuse bis auf eine Schraubendreheröffnung abgedeckt ist. Über den Umfang verteilt sind in dem Abdeckgehäuse in axialer Richtung ausgebildete Rippen vorgesehen, die gegeneinander einen kleinsten Abstand aufweisen, der kleiner als der Durchmesser des Schraubenkopfes ist. Beim Eindrehen der Klemmschraube werden bei diesem Stand der Technik die Rippen verformt und abgerieben. Durch die Elastizität der Rippen bedingt wird die Schraube verliersicher in dem Abdeckgehäuse aufgenommen.

Nachteilig bei diesem Stand der Technik ist allerdings, dass die sich in Längsrichtung der Schraube am Abdeckgehäuse erstreckenden Rippen in genauer Abstimmung mit der zu verwendeten Schraube angefertigt werden müssen, um eine sichere Funktion zu gewährleisten. Die einzuhaltenden Toleranzen sind sehr eng bemessen, da die Rippen einerseits ein Eindrehen der Schraube ermöglichen müssen ohne das Abdeckgehäuse durch Überdehnen zu zerstören, während andererseits die Schraube nach dem Einführen sicher gehalten werden muss.

Das führt zu der Notwendigkeit, die Maße exakt einzuhalten und bewirkt einen hohen Fertigungsaufwand und somit höhere Kosten bei der Herstellung.

Aus der DE 30 28 958 C2 ist eine Reihenklemme bekannt geworden, bei der die Klemmschraube in einem Schacht eines Körpers versenkbar angeordnet ist. In dem Schacht ist eine Profilierung vorgesehen, die sich beim Eindrehen der Schraube und beim Überstreichen des Kopfes elastisch deformieren lässt. Nach dem Überstreichen der Profilierung verformt sich die Profilierung nur teilweise elastisch zurück, sodass die als Wulst ausgeführte Profilierung als Sicherung dient.

Auch bei dieser aus dem Stand der Technik bekannten Anordnung ist eine sehr enge Abstimmung der Baumaße und das Einhalten sehr enger Fertigungstoleranzen erforderlich, um eine Zerstörung des Bauteils beim Eindrehen und einen Verlust der eingesetzten Schraube zuverlässig zu verhindern.

DE 9 308 096 U offenbart eine Vorrichtung nach dem Oberbegriff des Anspruchs 1.

Des Weiteren sind Vorrichtungen aus dem Stand der Technik bekannt geworden, bei denen in dem die Schraube aufnehmenden Schacht eine umlaufende Rippe vorgesehen ist, die einen kleineren freien Innendurchmesser aufweist als der größte Außendurchmesser des Schraubenkopfes. Wird eine Schraube in einen solchen Schacht eingeführt und an der ringförmigen Rippe vorbeigeführt, so ist sie in dem Schacht verliersicher aufgenommen. Auch diese an sich funktionierende Lösung erfordert allerdings eine genaue Abstimmung der Fertigungstoleranzen, da es bei automatischer Schraubenmontage ansonsten zu dem Abreißen des Schraubenflansches kommen kann, wenn nämlich die Dehnungskräfte beim Durchtritt des Schraubenkopfes die Haltbarkeit des Bauteils übersteigen. Ein solches System funktioniert bei langsamer Montage per Hand oder auch bei exakter Einhaltung der Toleranzen, was wiederum einen erheblichen fertigungstechnischen Aufwand und somit höhere Kosten verursacht.

Vor dem angeführten Stand der Technik ist es deshalb die Aufgabe der vorliegenden Erfindung, eine Vorrichtung und ein Verfahren zur verliersicheren Aufnahme einer Schraube an einem elektrischen Bauteil und insbesondere an einer Anschlussklemme zur Verfügung zu stellen, wobei größere Fertigungstoleranzen zulässig und eine hohe Zuverlässigkeit der Verliersicherung erzielbar sind.

Diese Aufgabe wird gelöst durch eine Vorrichtung mit den Merkmalen des Anspruchs 1 und durch ein Verfahren mit den Merkmalen des Anspruchs 9. Bevorzugte Weiterbildungen der Erfindung sind Gegenstand der jeweiligen Unteransprüche. eitere bevorzugte Merkmale der Erfindung werden in dem Ausführungsbeispiel angegeben.

Die erfindungsgemäße Vorrichtung ist insbesondere als elektrische Anschlussklemme ausgeführt und umfasst wenigstens ein Gehäuse und wenigstens einen daran vorgesehenen Schacht zur Aufnahme einer Schraube. Wenigstens eine Sicherungseinrichtung ist mit wenigstens einer an dem Gehäuse ausgebildeten Halteeinrichtung vorgesehen, um es zu ermöglichen, eine Schraube in dem Schacht verliersicher aufzunehmen. Erfindungsgemäß ermöglicht die Sicherungseinrichtung im Grundzustand des Gehäuses ein Einführen einer Schraube in den Schacht. Nach dem Einführen einer Schraube ist bei der erfindungsgemäßen Vorrichtung durch ein plastisches Umformen der Halteeinrichtung in den freien Querschnitt des Schachtes hinein ein Sicherungszustand erreichbar, in welchem eine Schraube verliersicher aufgenommen ist.

Die erfindungsgemäße Vorrichtung hat erhebliche Vorteile. Dadurch, dass in dem Grundzustand eine insbesondere ungestörte Zugänglichkeit des Schachtes bereitgestellt wird, sodass die Schraube ohne wesentliche Behinderung in den Schacht eingeführt werden kann, wird ein einfaches Einführen der Schraube in den Schacht des Gehäuses ermöglicht.

Ein Klemmen der Schraube in dem Schacht wird zuverlässig vermieden, da die Schraube die Sicherungseinrichtung beim Einführen nicht verdrängen muss.

Ein weiterer erheblicher Vorteil ist, dass die Sicherungseinrichtung bzw. die Halteeinrichtung der Sicherheitseinrichtung in einem Sicherungszustand überführbar ist, in dem die Halteeinrichtung in den freien Querschnitt des Schachtes hineinragt, um so die Schraube verliersicher aufzunehmen. Dabei wird der freie Querschnitt des Schachtes derart verringert, dass die Schraube oder wenigstens der Schraubenkopf nicht mehr an der Sicherungseinrichtung aus dem Schacht heraus vorbeigeführt werden kann.

Durch die plastische Umformung nach dem Einführen der Schraube wird eine hohe Zuverlässigkeit der Sicherung erzielt, während gleichzeitig besonders hohe Fertigungstoleranzen möglich - aber nicht erforderlich - sind. Praktisch gesagt, besteht kein Zusammenhang zwischen den Toleranzen der Sicherungseinrichtung und den Toleranzen des Schachtes bzw. der Schraube, sofern die Sicherungseinrichtung den Schacht weit genug überragt. Ein Kompromiss zwischen Einführbarkeit und Sicherungseigenschaft, wie es im Stand der Technik der Fall war, muss hier nicht eingegangen werden. Vorteilhaft ist auch, dass die plastische Umformung nicht durch die Schraube selbst bewirkt wird, sondern insbesondere durch ein separates Werkzeug.

In einer bevorzugten Weiterbildung der Erfindung ist wenigstens eine Halteeinrichtung als Erhebung, insbesondere an dem Gehäuse ausgebildet, die im Grundzustand in Längsrichtung des Schachtes von dem Gehäuse absteht. Vorzugsweise wird diese Erhebung durch die plastische Verformung nach dem Einführen der Schraube in den Sicherungszustand überführt, in dem die Erhebung in die freie Schachtfläche hineinragt.

In einer weiteren bevorzugten Ausgestaltung ist wenigstens eine Halteinrichtung als längliche Lasche oder als länglicher Stift ausgebildet, die bzw. der durch die plastische Verformung bedingt in die freie Querschnittsfläche des Schachtes hineinragt.

Besonders bevorzugt ist wenigstens eine Halteeinrichtung einstückig mit dem Gehäuse ausgebildet und insbesondere daran angespritzt. Dadurch wird eine einfache Produktherstellung ermöglicht.

In bevorzugten Ausgestaltungen kann eine Mehrzahl von Halteeinrichtungen an dem Schacht vorgesehen sein. Beispielsweise können 2, 3 oder mehr Halteeinrichtungen z.B. symmetrisch um den Schacht herum angeordnet sein, welche nach der plastischen Verformung und Überführung in den Sicherungszustand tangential oder radial in den Schacht hineinragen.

Möglich ist auch, dass ein Steg oder dergleichen an dem Schacht vorgesehen wird, der nach der plastischen Verformung als Dachüberstand über das zugängliche Ende des Schachtes wenigstens teilweise hinaus ragt und so die Schraube in dem Schacht sichert.

In allen Ausgestaltungen verbleibt im Sicherungszustand vorzugsweise genügend Freiraum am Schacht zur Verfügung, um einen Werkzeug, insbesondere einen Schraubendreher, an der Sicherungseinrichtung vorbei in den Schacht einzuführen und die Schraube, um die Schraube damit zu drehen.

Bei dem erfindungsgemäßen Verfahren zur Sicherung einer Schraube an einem elektrischen Bauteil, insbesondere an einer Anschlussklemme wird eine Schraube in einen Schacht eines Gehäuses eingeführt und anschließend wird die Schraube in dem Schacht vor unbeabsichtigtem Herausfallen gesichert.

Dazu wird nach dem Einführen der Schraube durch Umformen wenigstens eine Halteeinrichtung bereitgestellt, die als Sicherungseinrichtung radial nach innen in den Schacht übersteht und die Schraube so verliersicher in dem Schacht aufnimmt.

Auch das erfindungsgemäße Verfahren hat erhebliche Vorteile, da ein einfaches Verfahren zur verliersicheren Aufnahme einer Schraube an z.B. einer Anschlussklemme zur Verfügung gestellt wird. Durch das plastische Verformen wird eine Halteeinrichtung bereitgestellt oder umgeformt und es wird eine verliersichere Aufnahme ermöglicht, ohne dass exakte Fertigungstoleranzen der Sicherungseinrichtung, der Schraube und des Schachtes eingehalten werden müssen.

Durch den einfachen Verfahrensschritt des Umformens des Materials des Gehäuses oder einer separaten Halteeinrichtung erfolgt vor der Montage oder bei der Abpackung der Bauteile ein einfacher Schritt, der eine zuverlässige und kostengünstige Sicherung der Schrauben in dem Schacht ermöglicht.

In einer bevorzugten Weiterbildung des Verfahrens werden von dem Gehäuse abstehende Vorsprünge in den freien Querschnitt des Schachtes umgebogen, um die Schraube verliersicher in dem Schacht zu halten. Durch ein einfaches Anspritzen solcher Vorsprünge bei der Herstellung des Gehäuses können solche Halteeinrichtungen leicht zur Verfügung gestellt werden, die anschließend mechanisch oder thermisch umgeformt und umgelegt werden.

Bevorzugt ist auch, dass nach dem Einführen der Schraube in den Schacht mit einem Werkzeug ein Dachüberstand durch eine insbesondere plastische Verformung des Gehäuses direkt erzeugt wird. Beispielsweise kann durch einen scharfkantigen oder spitzen Gegenstand, der an den Schacht des Gehäuses angesetzt wird, eine plastische Verformung des Gehäuses erzielt werden, die ausreicht, um als Halteeinrichtung die Schraube verliersicher in dem Schacht aufzunehmen.

In einem besonders einfachen Fall reicht gegebenenfalls schon der Einsatz eines Kreuzschlitz-Schraubendrehers von passender Größe, der an den Schacht angesetzt wird, sodass mit einem leichten Schlag eine plastische Verformung des zugänglichen Endes des Schachtes erzielt wird, wodurch eine Halteeinrichtung durch Verformung des Schachtes und/oder des Gehäuses erzeugt wird.

Neben einer plastischen Verformung durch eine Kaltverformung kann auch eine plastische Verformung durch Warmverformung, insbesondere heißer Prägestempel, durchgeführt werden, bei der durch direkte Zufuhr von Wärme oder bei der durch Ultraschallbewegungen oder dergleichen Wärme erzeugt wird, sodass eine plastische Verformung des Material erfolgt.

In allen zuvor beschriebenen Ausgestaltungen wird vorzugsweise der Schacht und das Gehäuse wenigstens teilweise aus einem elastischen Material gefertigt und kann wenigstens teilweise oder auch insgesamt aus einem thermoplastischen Material bestehen, welches sich gut zur plastischen Verformung eignet.

Weitere Vorteile und Merkmale der vorliegenden Erfindung ergeben sich aus der Beschreibung eines Ausführungsbeispiels, das im Folgenden mit Bezug auf die beigefügten Zeichnungen erläutert wird.

In den Figuren zeigen:
- Fig. 1: eine perspektivische Ansicht einer erfindungsgemäßen Anschlussklemme;
- Fig. 2: eine stark schematische Aufsicht auf eine in einem Schacht verliersicher aufgenommene Schraube; und
- Fig. 3: eine stark schematische Querschnittsansicht einer in einem Schacht verliersicher aufgenommenen Schraube.

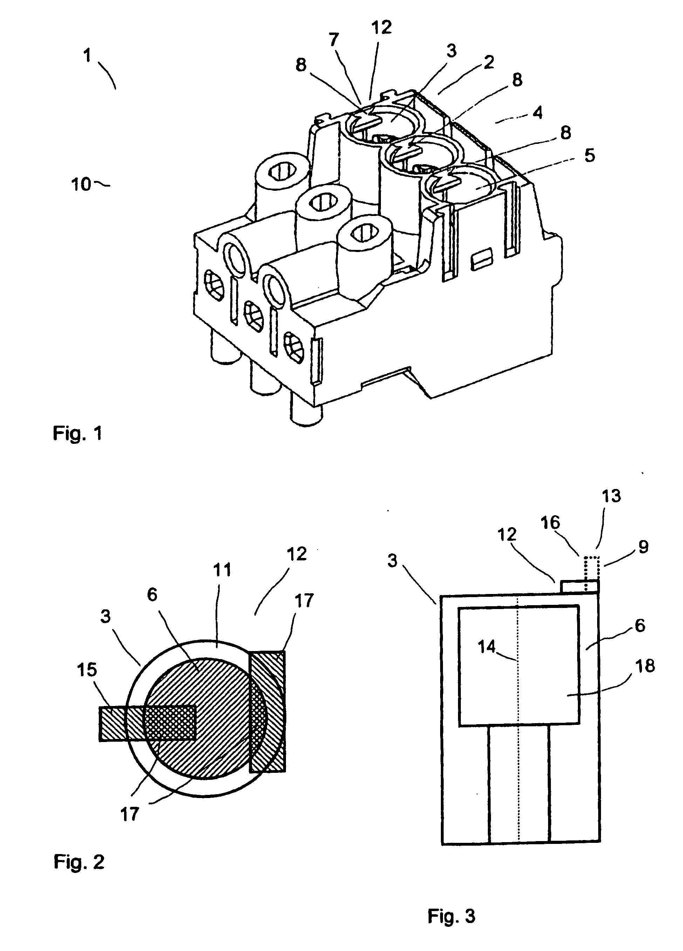

Mit Bezug auf die Figuren 1 - 3 wird im folgenden ein Ausführungsbeispiel einer erfindungsgemäßen Vorrichtung 1 beschrieben, die hier als elektrische Anschlussklemme 10 ausgeführt ist und über mehrere Leiteranschlüsse verfügt.

Die in Fig. 1 perspektivisch dargestellte Anschlussklemme 10 weist ein Gehäuse 2 auf, an dem hier im Ausführungsbeispiel drei Schächte 3, 4 und 5 vorgesehen sind, die jeweils zur verliersicheren Aufnahme einer Schraube 6 (vgl. die Fig. 2) vorgesehen sind.

Die in Fig. 1 perspektivisch dargestellte Anschlussklemme 10 ist im Sicherungszustand 12 dargestellt, in dem die Sicherungseinrichtungen 7 mit den Halteeinrichtungen 8 ein Herausfallen der in den Schächten 3 - 5 jeweils aufgenommenen Schraube 6 zuverlässig verhindert.

Hier im Ausführungsbeispiel nach Fig. 1 umfasst jede Sicherungseinrichtung 7 genau eine Halteeinrichtung 8, die im Sicherungszustand 12 gebogen und plastisch verformt in den freien Querschnitt 11 des jeweiligen Schachtes 3 - 5 hineinragt, sodass der zur Verfügung bleibende Querschnitt kleiner ist als der minimale Durchmesser des Schraubenkopfes 18 (vgl. Fig. 3). Gleichzeitig bleibt noch genügend Freiraum in dem Schacht, um ein Werkzeug zum Anziehen oder Lösen der Schraube in den jeweiligen Schacht 3-5 einzuführen.

In dem in Fig. 3 gepunktet dargestellten Grundzustand 9 geben die jeweiligen Halteeinrichtungen 8 hier, sodass die Schrauben 6 mit Spiel in die Schächte 3 - 5 einführbar sind. Das erlaubt große Toleranzen bei der Fertigung und eine einfache Montage.

Xx3: In anderen Ausgestaltungen kann die Halteeinrichtung 8 auch im Grundzustand 9 einen Teil des freien Querschnittes des Schachtes abdecken, sofern sicher gestellt wird, dass die Schraube 6 in einen Schacht einführbar und anschließend durch eine plastische Verformung sicherbar ist. Vorzugsweise bleibt der komplette Querschnitt der jeweiligen Schächte 3 - 5 frei im Grundzustand 9 frei.

Nach dem Einführen der Schraube 6 wird die Halteeinrichtung 8, die als Erhebung 13 oder Vorsprung 16 oder auch als Lasche 15 ausgebildet sein kann, plastische verformt und in den freien Querschnitt 11 des Schachtes 3 hineingebogen. Durch die plastische Verformung bedingt wird das obere Ende des Schachtes 3 teilweise verschlossen, sodass die Schraube 6 verliersicher in dem Schacht 3 aufgenommen ist.

Der in Fig. 2 länglich ausgebildete Dachüberstand 17 deckt einen genügenden Bereich des Querschnitts 11 ab, um die Schraube im Sicherungszustand 12 zuverlässig in dem Schacht 3 zurückzuhalten. Auch durch Vibrationen ändert sich daran nichts, wie Rütteltests ergeben haben.

Im Grundzustand 9, wie der gepunktet in Fig. 3 dargestellt ist, kann der Dachüberstand 17 als Vorsprung 16 oder Erhebung 13 ausgebildet sein, wie es in Fig. 3 dargestellt ist.

Vorzugsweise sind die Halteeinrichtungen 8 einstückig mit dem Gehäuse 2 oder dem jeweiligen Schacht 3 - 5 verbunden und insbesondere an den Schacht bzw. das Gehäuse schon beim Herstellen des Gehäuses angespritzt.

In allen Ausführungen besteht der Schacht vorzugsweise aus einem Kunststoff und insbesondere wenigstens teilweise aus einem elastischen Kunststoff wie z.B. einem Thermoplasten. Das erleichtert eine plastische Verformung der Halteeinrichtung, da bei thermoplastischen Materialien plastische Verformungen sowohl durch eine Kaltverformung als auch eine Warmverformung möglich sind, wobei Sprödbrüche weitgehend vermieden werden.

Im Unterschied zu den Darstellungen gemäß den Fig. 1 - 3 kann die Halteeinrichtung auch durch plastische Verformung des Lochrandes des Schachtes zur Verfügung gestellt werden, wozu in der Umgebung des Schachtes vorhandenes Material durch ein Werkzeug derart verdrängt wird, das es als Dachüberstand über die in dem Schacht 3-5 aufgenommene Schraube 6 in den freien Querschnitt des Schachtes hineinragt.

Beispielsweise kann ein spitzer Dorn vorgesehen sein, der beispielsweise an einem als Stempel ausgeführten Werkzeug sitzt, welcher die Schraube in den Schacht eindrückt. Dadurch wird direkt nach dem Einführen der Schraube in den Schacht sichergestellt, dass die Schraube verliersicher aufgenommen ist, da mit dem Stempel direkt auch die plastische Verformung des Schachtes bzw. des Gehäuses erfolgt.

Möglich ist auch der Einsatz eines schlitzförmigen oder kreuzschlitzförmigen Werkzeugs zur Verformung der Schachtwand, um einen Dachüberstand oberhalb der Schraube zu erzeugen.

In den beschriebenen Ausgestaltungen werden deutlich größere Toleranzen als heutzutage üblich ermöglicht, sodass die Fertigungstoleranzen verringert werden können und somit die Produktion der eingesetzten Bauteile einfacher und billiger wird. Gleichzeitig wird die Zuverlässigkeit mit der die Schrauben in den Schächten bzw. in den Anschlussklemmen aufgenommen sind, erheblich erhöht, während die Quote fehlerhaft hergestellter Teile verringert wird.

Möglich und bevorzugt ist auch der Einsatz von temperierten und insbesondere heißen Werkzeugen, um durch eine Aufweichung des Materials eine Fließen und eine plastische Verformung zu erreichen.

Bei einer plastischen Verformung über einen Dorn oder dergleichen kann die verformte Oberflächenstelle Wellen oder andere Verformungen aufweisen, deren optisches Aussehen an nicht direkt sichtbaren Stellen aber völlig und an anderen Stellen oftmals ausreicht.

Mit plastischen Verformungen durch Umbiegen oder bei Einsatz von Werkzeugen, die thermisch das Bauteil verformen, ist auch eine hohen und höchsten Ansprüchen genügende optische Qualität erzielbar.

### Bezugszeichenliste

- 1: Vorrichtung
- 2: Gehäuse
- 3: Schacht
- 4: Schacht
- 5: Schacht
- 6: Schraube
- 7: Sicherungseinrichtung
- 8: Halteeinrichtung
- 9: Grundzustand
- 10: Anschlussklemme
- 11: freier Querschnitt
- 12: Sicherungszustand
- 13: Erhebung
- 14: Längsrichtung
- 15: Lasche
- 16: Vorsprung
- 17: Dachüberstand
- 18: Schraubenkopf

## Patentansprüche

1. Vorrichtung (1), insbesondere eine Anschlussklemme (10), umfassend ein Gehäuse (2) und wenigstens einen daran vorgesehenen Schacht (3, 4, 5) zur Aufnahme einer Schraube (6), wobei
die Schraube (6) einen Schraubenkopf (18) aufweist, eine Sicherungseinrichtung (7) mit wenigstens einer an dem Gehäuse (2) ausgebildeten Halteeinrichtung (8) vorgesehen ist, um es zu ermöglichen, die Schraube (6) in dem Schacht (3, 4, 5) verliersicher aufzunehmen,
die Sicherungseinrichtung (7) im Grundzustand (9) ein Einführen der Schraube (6) in den Schacht (3, 4, 5) ermöglicht,
nach dem Einführen der Schraube (6) durch ein plastisches Umformen der Halteeinrichtung (8) in den freien Querschnitt (11) des Schachtes (3, 3, 5) hinein ein Sicherungszustand (12) erreichbar ist, in welchem die Schraube (6) verliersicher derart aufgenommen ist, **dadurch gekennzeichnet, dass**
der Schraubenkopf (18) der in den Schacht (3, 4, 5) eingeführten Schraube (6) nicht mehr aus dem Schacht (3, 4, 5) heraus an der Sicherungseinrichtung (7) vorbeigeführt werden kann.

2. Vorrichtung (1) nach Anspruch 1, wobei der Schacht (3, 4, 5) und/oder das Gehäuse (2) derart ausgestaltet ist, dass die Halteeinrichtung (8) durch Verformung des zugänglichen Endes des Schachtes (3, 4, 5) bzw. des Gehäuses (2) erzeugbar ist.

3. Vorrichtung (1) nach einem der vorhergehenden Ansprüche, wobei wenigstens eine Halteeinrichtung (8) als Erhebung (13) ausgebildet ist, die im Grundzustand (9) in Längsrichtung (14) des Schachtes (3, 4, 5) von dem Gehäuse (2) absteht.

4. Vorrichtung (1) nach einem der vorhergehenden Ansprüche, wobei wenigstens eine Halteeinrichtung (8) als längliche Lasche (15) oder als länglicher Stift ausgebildet ist.

5. Vorrichtung (1) nach einem der vorhergehenden Ansprüche, wobei die Halteeinrichtung (8) einstückig mit dem Gehäuse (2) ausgebildet ist und insbesondere angespritzt ist.

6. Vorrichtung (1) nach einem der vorhergehenden Ansprüche, wobei eine Mehrzahl von Halteeinrichtungen (8) an dem Schacht (3, 4, 5) vorgesehen sind.

7. Vorrichtung (1) nach dem vorhergehenden Anspruch, wobei die Halteeinrichtungen (8) symmetrisch zum Schacht (3, 4, 5) angeordnet sind.

8. Vorrichtung (1) nach einem der vorhergehenden Ansprüche, wobei die Vorrichtung (1) als Anschlussklemme ausgeführt ist.

9. Verfahren zur Sicherung einer Schraube (6) an einer Anschlussklemme (10), bei dem
eine Schraube (6) in einen Schacht (3, 4, 5) eines Gehäuses (2) einer Anschlussklemme (10) eingeführt wird, wobei
die Schraube (6) einen Schraubenkopf (18) aufweist, und bei dem anschließend
die Schraube (6) in dem Schacht (3, 4, 5) vor unbeabsichtigtem Herausfallen gesichert wird, indem
nach dem Einführen der Schraube (6) durch Umformen wenigstens eine Halteeinrichtung (8) bereit gestellt wird, welche radial nach innen in den Schacht (3, 4, 5) übersteht und die Schraube (6) verliersicher derart aufnimmt, **dadurch gekennzeichnet, dass** der Schraubenkopf (18) der in den Schacht (3, 4, 5) eingeführten Schraube (6) nicht mehr aus dem Schacht (3, 4, 5) herausgeführt werden kann.

10. Verfahren nach dem vorhergehenden Anspruch, bei dem wenigstens eine von dem Gehäuse (2) abstehende Halteeinrichtung oder wenigstens ein Vorsprung (16) in den freien Querschnitt (11) des Schachtes (3, 4, 5) umgebogen wird, um die Schraube (6) verliersicher in dem Schacht (3, 4, 5) zu halten.

11. Verfahren nach Anspruch 9 oder 10, wobei nach dem Einführen der Schraube (6) in den Schacht (3, 4, 5) mit einem Werkzeug ein Dachüberstand (17) durch Verformung des Gehäuses (2) erzeugt wird.

12. Verfahren nach einem der Ansprüche 9 bis 11, wobei eine Kaltverformung durchgeführt wird.

13. Verfahren nach einem der Ansprüche 9 bis 11, wobei eine Warmverformung durchgeführt wird.

14. Verwendung eines Verfahrens nach einem der Ansprüche 9 bis 13 zur Sicherung einer Schraube (6) an einer Anschlussklemme (10).

## Claims

1. Device (I), especially a connector (10), comprising a housing (2) and at least one shaft (3, 4, 5) provided on it for receiving a screw (6), wherein
the screw (6) has a screw head (18),
a locking device (7) with at least one retaining element (8) formed on the housing (2) is provided to make it possible to hold the screw (6) in the shaft (3, 4, 5) securely against loss,
the locking device (7) in its initial state (9) permits introduction ofthe screw (6) into the shaft (3, 4, 5),
after introduction of the screw (6) into the free cross section (11) of the shaft (3, 4, 5), a locking condition (12) can be achieved by plastic deformation of the retaining element (8), in which the screw (6) is held securely against loss, **characterized in that**
the screw head (18) of the screw (6) introduced into the shaft (3, 4, 5) can no longer be moved past the locking device (7) and out of the shaft (3, 4, 5).

2. Device (1) according to claim 1, wherein the shaft (3, 4, 5) and/or the housing (2) is designed such that the retaining element (8) can be produced by shaping the accessible end of the shaft (3, 4, 5) or the housing (2).

3. Device (1) according to one ofthe preceding claims, wherein at least one retaining element (8) is formed as an elevation (13) which in the initial state (9) projects away from the housing (2) in the longitudinal direction (14) of the shaft (3,4,5).

4. Device (1) according to one ofthe preceding claims, wherein at least one retaining element (8) is formed as an elongated lug (15) or an elongated pin.

5. Device (1) according to one of the preceding claims, wherein the retaining element (8) is made in one piece with the housing (2) and in particular is extruded on.

6. Device (1) according to one ofthe preceding claims, wherein a plurality of retaining elements (8) are provided on the shaft (3, 4, 5).

7. Device (1) according to one ofthe preceding claims, wherein the retaining elements (8) are disposed symmetrically around the shaft (3, 4, 5).

8. Device (1) according to one of the preceding claims, wherein the device (1) is formed as a connector.

9. Method for securing a screw (6) on a connector (10), in which
a screw (6) is introduced into a shaft (3, 4, 5) of a housing (2) of a connector (10), wherein
the screw (6) has a screw head (18), and in which subsequently
the screw (6) is secured in the shaft (3, 4, 5) against unintentionally falling out, in that
after introduction of the screw (6), at least one retaining element (8), which projects radially inward into the shaft (3, 4, 5) and receives the screw (6) in a loss-preventing manner, is produced by shaping in such a manner that **characterized in that** the screw head (18) of the screw (6) introduced into the shaft (3, 4, 5) can no longer be removed from the shaft (3, 4, 5).

10. Method according to one of the preceding claims, in which at least one retaining element projecting away from the housing (2) or at least one protrusion (16) into the free cross section (11) ofthe shaft (3, 4, 5) is recurved to retain the screw (6) in the shaft (3, 4, 5) securely against loss.

11. Method according to claim 9 or 10, wherein after introduction of the screw (6) into the shaft (3, 4, 5) a roof overhang (17) is created by shaping the housing (2) with a tool.

12. Method according to one ofthe claims 9 to 11, wherein cold shaping is performed.

13. Method according to one of the claims 9 to 11, wherein hot shaping is performed.

14. Use of a method according to one of the claims 9 to 13 for securing a screw (6) to a connector (10).

## Revendications

1. Dispositif (1), en particulier bande de raccordement (10), comprenant
un boîtier (2) dans lequel est prévu au moins un puits (3, 4, 5) qui reprend une vis (6),
la vis (6) présentant une tête (18) de vis,
un dispositif de blocage (7) présentant au moins un dispositif de maintien (8) formé sur le boîtier (2) étant prévu pour permettre de reprendre la vis (6) dans le puits (3, 4, 5) en empêchant qu'elle se perde,
le dispositif de blocage (7) permettant dans un état de base (9) d'insérer la vis (6) dans le puits (3, 4, 5),
un état de blocage (12) dans lequel la vis (6) est reprise de manière à ne pas pouvoir se perdre pouvant être atteint après l'insertion de la vis (6) par déformation plastique du dispositif de maintien (8) dans la section transversale libre (11) du puits (3, 4, 5),
**caractérisé en ce que**
la tête (18) de la vis (6) insérée dans le puits (3, 4, 5) ne peut plus sortir du puits (3, 4, 5) en passant devant le dispositif de blocage (7).

2. Dispositif (1) selon la revendication 1, dans lequel le puits (3, 4, 5) et/ou le boîtier (2) sont configurés de telle sorte que le dispositif de maintien (a) peut être obtenu par déformation de l'extrémité accessible du puits (3, 4, 5) ou du boîtier (2).

3. Dispositif (1) selon l'une des revendications précédentes, dans lequel au moins un dispositif de maintien (8) est configuré comme saillie (13) qui, à l'état de base (9), déborde du boîtier (2) dans le sens de la longueur (14) du puits (3, 4, 5).

4. Dispositif (1) selon l'une des revendications précédentes, dans lequel au moins un dispositif de maintien (8) est configuré comme poche allongée (15) ou comme tige allongée.

5. Dispositif (1) selon l'une des revendications précédentes, dans lequel le dispositif de maintien (8) est formé d'un seul tenant avec le boîtier (2) et est en particulier moulé par injection sur ce dernier.

6. Dispositif (1) selon l'une des revendications précédentes, dans lequel plusieurs dispositifs de maintien (8) sont prévus sur le puits (3, 4, 5).

7. Dispositif (1) selon l'une des revendications précédentes, dans lequel les dispositifs de maintien (8) sont disposés symétriquement par rapport au puits (3, 4, 5).

8. Dispositif (1) selon l'une des revendications précédentes, dans lequel le dispositif (1) est configuré comme borne de raccordement.

9. Procédé de blocage d'une vis (6) sur une borne de raccordement (10), dans lequel
une vis (6) est insérée dans un puits (3, 4, 5) ménagé dans le boîtier (2) d'une borne de raccordement (10), la vis (6) présentant une tête (18) de vis,
et dans lequel
la vis (6) placée dans le puits (3, 4, 5) est ensuite empêchée de tomber par inadvertance par le fait qu'après l'insertion de la vis (6), au moins un dispositif de maintien (8) qui déborde radialement vers l'intérieur dans le puits (3, 4, 5) est formé par déformation et reprend la vis (6) de manière à l'empêcher de tomber,
**caractérisé en ce que**
la tête (18) de la vis (6) insérée dans le puits (3, 4, 5) ne peut plus être extraite hors du puits (3, 4, 5).

10. Procédé selon la revendication précédente, dans lequel au moins un dispositif de maintien débordant du boîtier (2) ou au moins une saillie (16) est rabattue dans la section transversale libre (11) du puits (3, 4, 5) pour maintenir la vis (6) dans le puits (3, 4, 5) de telle sorte qu'elle ne puisse en tomber.

11. Procédé selon les revendications 9 ou 10, dans lequel après l'insertion de la vis (6) dans le puits (3, 4, 5), un débord en toit (17) est formé à l'aide d'un outil qui déforme le boîtier (2).

12. Procédé selon l'une des revendications 9 à 11, dans lequel une déformation à froid est réalisée.

13. Procédé selon l'une des revendications 9 à 11, dans lequel une réformation à chaud est réalisée.

14. Utilisation d'un procédé selon l'une des revendications 9 à 13 pour bloquer une vis (6) sur une borne de raccordement (10).
